# EUROPEAN PATENT SPECIFICATION

(11) **EP 4 488 825 B1**
(45) Date of publication and mention of the grant of the patent: **02.09.2026**
(21) Application number: 24186440.4
(22) Date of filing: 04.07.2024
(51) Int. Cl.: G06F 8/65, G06F 11/14

(54) **INFORMATION PROCESSING APPARATUS, METHOD, AND PROGRAM**
INFORMATIONSVERARBEITUNGSVORRICHTUNG, -VERFAHREN UND -PROGRAMM
APPAREIL, PROCÉDÉ ET PROGRAMME DE TRAITEMENT D'INFORMATIONS

(30) Priority: 05.07.2023 JP 2023110765
(43) Date of publication of application: 08.01.2025
(73) Proprietor: Ricoh Company, Ltd., Tokyo 143-8555 (JP)
(72) Inventor: SHIGA, Yohsuke, Tokyo, 143-8555 (JP)
(74) Representative: SSM Sandmair

(56) References cited:
- EP-A1- 4 047 477
- US-B2- 7 398 331

## Description

### BACKGROUND OF THE INVENTION

### 1. Field of the Invention

The present invention relates to an information processing apparatus, a method, and a program.

### 2. Description of the Related Art

Conventionally, in information processing apparatuses, such as multifunction peripherals and printers, in order to correct defects or add functions after the product is put on the market, firmware update is performed. Then, when a defect is mixed in the latest firmware, other functions are unintentionally affected, and in some cases, the quality of the software is degraded compared with that before the change. When it is desired to return to the old version (previous version) in order to avoid such degradation due to the firmware update, it is necessary to perform the firmware update again. In this case, before the program is rewritten to the new version, the program of the old version is backed up in a hard disk drive or the like in advance, and when a problem occurs due to the firmware and the program is to be restored, the program is rewritten to the old version.

On the other hand, there is a technology for easily restoring the old version by having a storage device, such as a flash ROM, having a dual plane storage area for storing the program and switching the plane to be read at the time of startup.

Patent Document 1: Japanese Unexamined Patent Application Publication No. 2005-074644
EP 4 047 477 A1 discloses a network system used for updating software of an electronic control unit mounted on a vehicle.

In the conventional technology for backing up the program of the old version, the program needs to be backed up in advance, and when restoring the program, the program needs to be rewritten to the old version, and, therefore, there is a problem that the restoration takes a long time. This becomes more noticeable especially when the number of devices increases. Further, the technology for making the storage area to be dual plane is not sufficient in that there are devices that cannot have a dual plane storage area because of capacity or cost, and if there is such a device that cannot have a dual plane storage area, the restoration cannot be performed for such a device. In particular, if a device that can have a dual plane storage area and a device that cannot have a dual plane storage area coexist, there is a possibility that the quality of the entire apparatus is degraded due to version mismatch between the devices.

The technology of Patent Document 1 is known in relation to returning to the old version of the firmware. Patent Document 1 discloses a configuration in which restoration from the new version to the old version of the program is accepted either individually or collectively for the purpose of enabling to return to the old version of the program information voluntarily and selectively, and reducing the time required for restoration of the program information. The conventional technology described in Patent Document 1 can make the program return to the old version from the new version. However, the conventional technology described in Patent Document 1 cannot solve the problem that restoration takes time because the program needs to be backed up in advance and the program needs to be rewritten to the old version when restoration is performed.

The present disclosure has been made in view of the above, and an object of the present disclosure is to provide an information processing apparatus capable of preventing mismatching of versions between devices and reducing the time required for restoration while preventing degrading of the quality of the entire apparatus in a configuration where devices having a plurality of storage areas for holding a plurality of versions (versions) of a program and devices having a storage area for holding a version of a program coexist.

### SUMMARY OF THE INVENTION

According to one aspect of the present invention, there is provided an information processing apparatus includes a first device; a second device; a control unit configured to implement control to update or restore at least one of a first program of the first device or a second program of the second device; and a storage unit configured to store a first version of the second program of the second device, wherein the first device includes a plurality of storage areas for respectively holding a first version and a second version of the first program, the second device includes a storage area for holding a second version of the second program different from the first version of the second program, when restoring the first program of the first device, the control unit makes a setting in the first device so as to switch a storage area used for startup among the plurality of the storage areas, and when restoring the second program of the second device, the control unit rewrites the storage area of the second device with the first version of the second program stored in the storage unit.

According to one embodiment of the present invention, in a configuration in which a device having a plurality of storage areas for holding a plurality of versions of a program and a device having a storage area for holding a version of a program are mixed, it is possible to reduce the time required for restoration while preventing the mismatching of the versions among the devices and thereby preventing the degradation of the quality of the entire apparatus.

### BRIEF DESCRIPTION OF THE DRAWINGS

FIG. 1 is a hardware configuration diagram of a multifunction peripheral as an example of an information processing apparatus subject to firmware update and restoration according to an embodiment of the present invention;
FIG. 2 is a diagram illustrating main hardware and functional blocks related to firmware update processing, restoration processing, and associated startup processing in a multifunction peripheral as an example of an information processing apparatus according to an embodiment of the present invention;
FIG. 3 is a diagram for explaining firmware update processing in a multifunction peripheral as an example of an information processing apparatus according to an embodiment of the present invention;
FIG. 4 is a diagram for explaining firmware restoration processing in a multifunction peripheral as an example of an information processing apparatus according to an embodiment of the present invention;
FIG. 5 is a flowchart illustrating firmware update processing executed by the multifunction peripheral as an example of the information processing apparatus according to an embodiment of the present invention;
FIG. 6 is a flowchart illustrating firmware restoration processing executed by the multifunction peripheral as an example of the information processing apparatus according to an embodiment of the present invention;
FIG. 7 illustrates the data structure of the device information list for determining the number of storage areas of the update destination device according to an embodiment of the present invention;
FIG. 8 is a diagram for explaining startup processing after update or restoration executed in the multifunction peripheral as an example of the information processing apparatus according to an embodiment of the present invention; and
FIG. 9 is a diagram for explaining other startup processing after update or restoration executed in the multifunction peripheral as an example of the information processing apparatus according to an embodiment of the present invention.

### DESCRIPTION OF THE EMBODIMENTS

Hereinafter, the present embodiment will be described in detail with reference to the drawings, but the embodiment is not limited to the specific embodiment described. Note that the embodiment of the present disclosure is open to various changes and modifications.

Hereinafter, the present embodiment will be described in more detail with reference to the drawings, taking as an example a multifunction peripheral and a controller thereof, as an information processing apparatus and the control device thereof. However, the information processing apparatus and the control device thereof according to the present embodiment are not limited to these. The embodiment of the present disclosure can be applied to any information processing apparatus including a plurality of devices and the control device thereof. Here, the device refers to a device constituting the information processing apparatus together with other devices and serving as a unit for updating software, such as firmware.

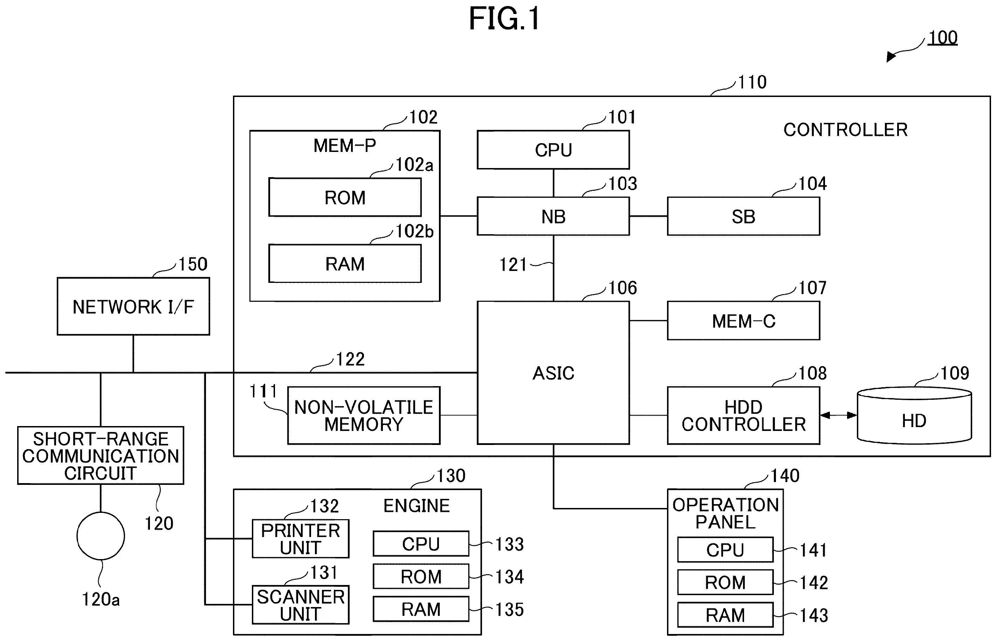

FIG. 1 is a hardware configuration diagram of a multifunction peripheral as an example of an information processing apparatus that is a target of firmware update and restoration according to the present embodiment. As illustrated in FIG. 1, the multifunction peripheral (MFP, Multifunction Peripheral/Product/Printer) 100 includes a controller 110, a short-range communication circuit 120, an engine 130, an operation panel 140, and a network I/F 150.

Among these, the controller 110 has a CPU 101 which is a main part of a computer, a system memory (MEM-P) 102, a north bridge (NB) 103, a south bridge (SB) 104, an ASIC (Application Specific Integrated Circuit) 106, a local memory (MEM-C) 107 which is a storage unit, an HDD controller 108, an HD 109 which is a storage unit, and a non-volatile memory 111, and the NB 103 and the ASIC 106 are connected by an AGP (Accelerated Graphics Port) bus 121. The controller 110 constitutes a control device in the present embodiment for controlling firmware update and restoration of the entire multifunction peripheral 100.

Of these, the CPU 101 is a control unit for overall control of the multifunction peripheral 100. The NB 103 is a bridge for connecting the CPU 101, the MEM-P 102, the SB 104, and the AGP bus 121, and has a memory controller for controlling reading and writing to and from the MEM-P 102, a PCI (Peripheral Component Interconnect) master, and an AGP target.

The MEM-P 102 includes a ROM 102a, which is a memory for storing programs and data for implementing each function of the controller 110, and a RAM 102b, which is used as a memory for loading programs and data, and for rendering during memory printing. Programs and data stored in the ROM 102a are targets of firmware update and restoration according to the present embodiment.

The SB 104 is a bridge for connecting the NB 103, a PCI device, and peripheral devices. The ASIC 106 is an integrated circuit (IC) for image processing that includes hardware elements for image processing, and serves as a bridge for connecting the AGP bus 121, the PCI bus 122, the HD 109, the MEM-C107, and the non-volatile memory 111. The ASIC 106 includes a PCI target and an AGP master, an arbiter (ARB) that forms the core of the ASIC 106, a memory controller that controls the MEM-C 107, a plurality of DMACs (Direct Memory Access Controllers) that rotate image data by hardware logic or the like, and a PCI unit that transfers data between the scanner unit 131 and the printer unit 132 via the PCI bus 122. The ASIC 106 may be connected to a USB (Universal Serial Bus) interface or an IEEE1394 (Institute of Electrical and Electronics Engineers 1394) interface.

The MEM-C 107 is a local memory used as a copy image buffer and a code buffer. The HD 109 is a storage for storing image data, font data used at the time of printing, and forms. In the described embodiment, the HD 109 constitutes a storage unit in the present embodiment for storing a backup of firmware (program) of a predetermined version. The HD 109 controls reading or writing of data to or from the HD 109 under the control of the CPU 101. The AGP bus 121 is a bus interface for a graphics accelerator card proposed for speeding up graphics processing, and can speed up the graphics accelerator card by directly accessing the MEM-P 102 at high throughput. The non-volatile memory 111 is a memory for storing various types of data requiring nonvolatility (specification of a storage area to be used for starting up the dual plane ROM of a predetermined device according to the present embodiment, etc.).

The short-range communication circuit 120 includes an antenna 120a. The short-range communication circuit 120 is a communication circuit, such as NFC, Bluetooth (registered trademark), etc.

Further, the engine 130 includes a scanner unit 131, a printer unit 132, a CPU 133, a ROM 134, and a RAM 135. Of these, the CPU 133 is a control unit that performs various kinds of control of the engine 130. The ROM 134 is a memory for storing programs and data that implement the functions of the engine 130. The RAM 135 provides a work area in which programs stored in the ROM 134 are loaded. Programs and data stored in the ROM 134 of the engine 130 are targets of firmware update and restoration according to the present embodiment.

The operation panel 140 includes a central processing unit (CPU) 141, a read-only memory (ROM) 142, a random access memory (RAM) 143, and a panel display unit (not illustrated). The CPU 141 is a control unit that controls the operation panel 140. The ROM 142 is a memory for storing programs and data that implement the functions of the operation panel 140. The RAM 143 provides a work area in which programs stored in the ROM 142 are loaded. The panel display unit includes a touch panel that displays current setting values, selection screens, and the like and receives input from the user, a numeric keypad that receives setting values of conditions related to image formation, such as density setting conditions, and a start key that receives a copy start instruction. Programs and data stored in the ROM 142 of the operation panel 140 are targets of firmware update and restoration according to the present embodiment.

As described above, in the present embodiment, the controller 110, the engine 130, and the operation panel 140 constitute the multifunction peripheral 100 and a "device" as a unit for updating and restoring firmware. The programs (firmware) stored in the ROM 102a of the controller 110, the ROM 134 of the engine 130, and the ROM 142 of the operation panel 140 are targets to be updated and restored.

The controller 110 controls the entire multifunction peripheral 100 and controls, for example, rendering, communication, input from the operation panel 140, and the like. In the described embodiment, the controller 110 controls the entire firmware update and restoration of a plurality of devices, more specifically, the controller 110 itself, the engine 130, and the operation panel 140. The scanner unit 131 or the printer unit 132 includes image processing parts, such as error diffusion and gamma conversion.

An application switch key on the operation panel 140 of the multifunction peripheral 100 can be used to cycle through a document box function, a copy function, a printer function, and a facsimile function to select one of the functions. A document box mode is selected when a document box function is selected, a copy mode is selected when a copy function is selected, a printer mode is selected when a printer function is selected, and a facsimile mode is selected when a facsimile mode is selected.

The network I/F 150 is an interface for data communication using a communication network. The short-range communication circuit 120 and the network I/F 150 are electrically connected to the ASIC 106 via the PCI bus 122.

The hardware configuration illustrated in FIG. 1 is an example, and a part of the configuration illustrated in FIG. 1 may be omitted, or components other than those illustrated in FIG. 1 may be included. For example, the network I/F 150 may be a network interface card for a wired LAN (local area network), a network adapter for a wireless LAN, or a configuration for communicating with a device using Bluetooth (registered trademark) or the like.

The scanner unit 131 may include, for example, a document glass and an automatic document feed device, and a sensor for detecting the size of a document. The configuration of the printer unit 132 is not particularly limited, and may be a printer of any system, such as an electrophotographic system or an inkjet system. The printer unit 132 may further include a post-processing device, such as a stapler and a finisher.

Although the hardware configuration of the multifunction peripheral 100 has been described, by appropriately adding or deleting components (for example, deleting the scanner unit), information processing apparatuses other than image processing apparatuses, such as a printer which is an image forming apparatus other than the multifunction peripheral, a facsimile which is an image transmitting device, a scanner which is an image reading device, an image forming apparatus, an image transmitting device, and an image reading device can be similarly configured.

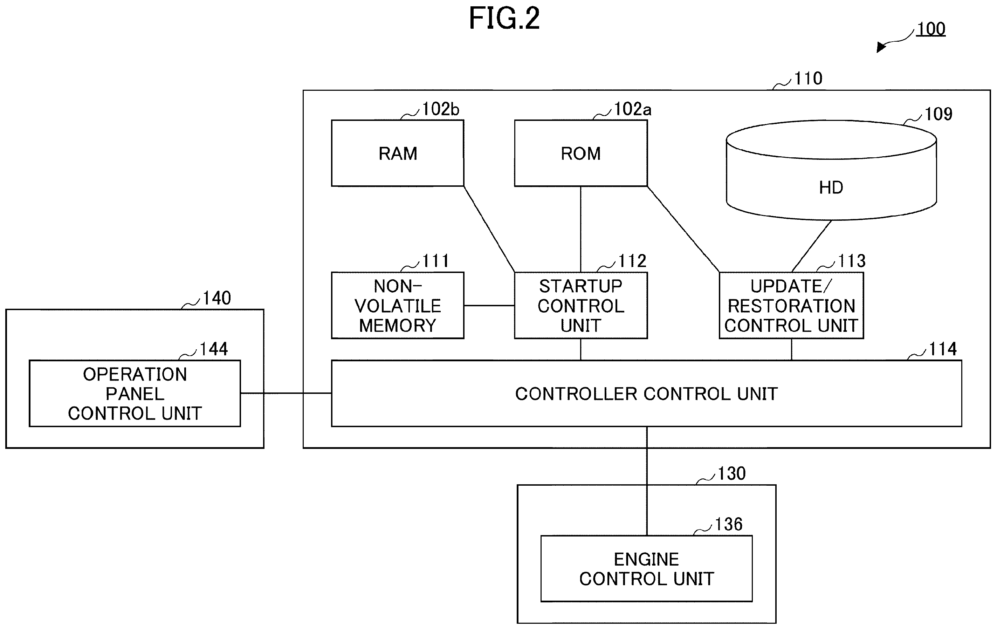

Referring to FIGS. 2 to 9, the firmware update processing and restoration processing and the associated startup processing executed in the multifunction peripheral 100 will be described in more detail below. FIG. 2 illustrates the main hardware and functional blocks related to the firmware update processing and restoration processing and the associated startup processing in the multifunction peripheral 100 as an example of the information processing apparatus according to the present embodiment.

In FIG. 2, the ROM 102a, the RAM 102b, HD 109, the non-volatile memory 111, the startup control unit 112, the update/restoration control unit 113, and the controller control unit 114 are illustrated as blocks on the controller 110.

The startup control unit 112 executes startup processing of the controller 110. The startup control unit 112 corresponds to the boot loader of the controller 110. In the described embodiment, the ROM 102a of the controller 110 has a sufficient capacity and is dual plane, and the controller 110 has a plurality of storage areas for holding different versions (first version and second version) of a program. These two storage areas are obtained by dividing the storage area of the ROM (storage device) 102a and are rewritable partial storage areas of typically the same capacity. Therefore, even if an unintentional power loss occurs during the rewriting and the rewriting fails, a state in which the rewriting is successful can be maintained. The startup control unit 112 refers to the non-volatile memory 111 when the multifunction peripheral 100 is started up and the controller 110 is started up, and identifies a storage area (plane) to be used (referred to) for starting up the ROM 102a. Next, the startup control unit 112 reads a firmware program from the identified storage area to be used, and loads the program into the RAM 102b. After the program is loaded into the RAM 102b, each program is executed.

The update/restoration control unit 113 performs control to update the firmware stored in the ROM 102a of the controller 110 to the latest version and to restore the firmware to the old version in response to an instruction from a user or the like. The update/restoration control unit 113 performs control to update and restore the firmware of the controller 110 itself, and also performs control to update and restore the firmware of other devices (e.g., the engine 130, the operation panel 140, other facsimile control units, etc.) of the multifunction peripheral 100 by transmitting instructions to other devices via the controller control unit 114. The update/restoration control unit 113 constitutes a control unit in the present embodiment.

The controller control unit 114 performs various kinds of control as the controller 110. When updating another device, the controller control unit 114 transfers update data to the control unit of the corresponding device and requests the update. The HD 109 constitutes a storage unit in the present embodiment for backing up and storing the firmware of the ROM that is not dual plane due to capacity or the like.

Although the startup control unit 112, the update/restoration control unit 113, and the controller control unit 114 are illustrated as separate functional blocks in FIG. 2, in practice, for example, the CPU 101 of the controller 110 may read and execute the respective programs to implement these units.

FIG. 2 further illustrates an engine control unit 136 as a block on the engine 130, and an operation panel control unit 144 as a block on the operation panel 140.

When starting up the engine 130, the engine control unit 136 is implemented by the CPU 133 of the engine 130 reading a program from the ROM 134 and loading the program to the RAM 135. The engine control unit 136 performs various kinds of control of the engine 130, and in response to an instruction from the controller 110, updates the firmware of the engine 130 with a program included in the specified update data.

When starting up the operation panel 140, the operation panel control unit 144 is implemented by the CPU 141 of the operation panel 140 reading a program from the ROM 142 and loading the program to the RAM 143. The operation panel control unit 144 performs various kinds of control of the operation panel 140, and in response to an instruction from the controller 110, updates the firmware of the operation panel 140 with a program included in the specified update data.

In the described embodiment, the update/restoration control unit 113 of the controller 110 is assumed to take charge of the firmware update and restoration control. However, the control is not limited to such a configuration, and another device (e.g., the engine 130, the operation panel 140, or other devices) may take charge of the firmware update and restoration control. Hereinafter, the firmware update and restoration processing will be described more specifically on the assumption that the update/restoration control unit 113 of the controller 110 takes charge of the overall control.

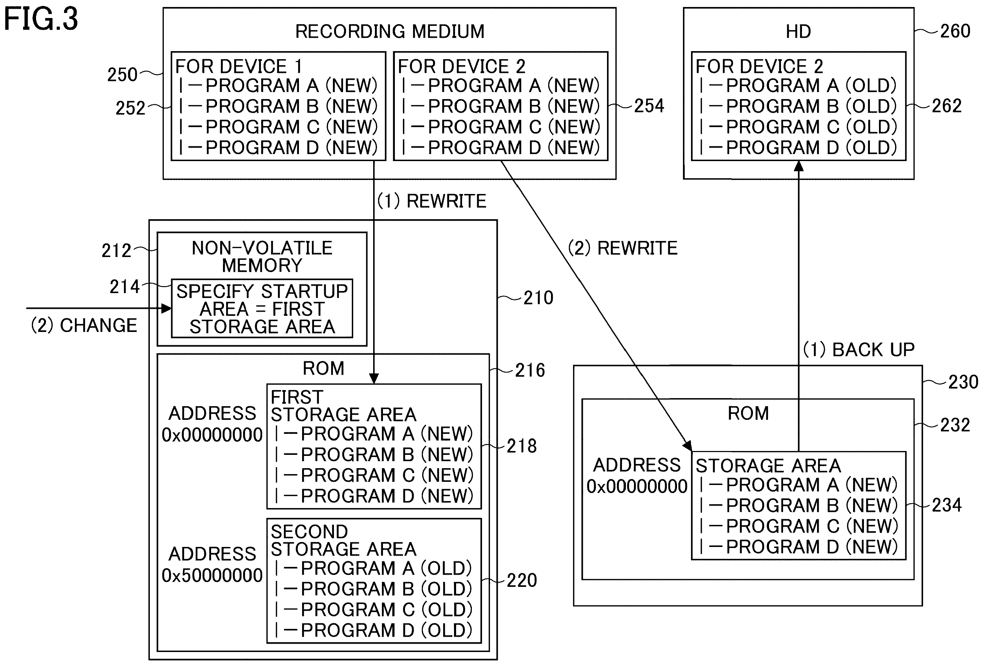

FIG. 3 is a diagram for explaining the firmware update processing in the multifunction peripheral 100 as an example of the information processing apparatus according to the present embodiment. FIG. 3 illustrates a first device 210 as a device having a ROM that supports dual plane storage and a second device 230 as a device having a ROM that does not support dual plane storage. The first device 210 and the second device 230 may each be at least one of the controller 110, the engine 130, and the operation panel 140. Also, in FIG. 3, the latest version of the firmware for the update
is prepared on a recording medium 250, such as an SD card, and an HD 260 is prepared as the backup of the firmware of the second device 230 as a device having a ROM that does not support dual plane storage.

Before the update, the first device 210 holds different versions of the firmware for the first device in a plurality of storage areas 218, 220, respectively. In the described embodiment, the number of storage areas is two, but the number is not limited thereto. The non-volatile memory 212 is provided with a specification 214 of an area (startup area) to be referenced or used at startup. According to the specification 214 of the startup area, one of the different versions held in the plurality of storage areas is used.

When updating the first device 210 that supports dual plane storage with the latest version 252 of the firmware for the first device (device 1), the update/restoration control unit 113 (1) reads the latest version 252 of the firmware for the first device from the recording medium 250 and rewrites one of the plurality of storage areas 218, 220 (the first storage area 218 in the example of FIG. 3) of the ROM 216. Next, the update/restoration control unit 113 (2) rewrites the specification 214 of the startup area of the non-volatile memory 212 and requests (sets) the startup control unit of the device 210 so that the storage area to be used at startup becomes the storage area holding the latest version (218 in the example of FIG. 3). Note that, among the plurality of storage areas 218, 220, the area opposite to the area specified by the specification 214 of the current startup area is selected so that the old version one before the latest version to be updated remains.

On the other hand, when updating the second device 230 that does not support dual plane storage with the latest version 254 of the firmware for the second device (device 2), the update/restoration control unit 113 (1) reads the current version (the old version) of the firmware for the second device held in the single storage area 234 of the ROM 232 of the second device 230 and stores the current version (the old version) in the HD 260 as a backup 262. Next, the update/restoration control unit 113 (2) reads the latest version 254 of the firmware for the second device from the recording medium 250 and rewrites the single storage area 234 of the ROM 232 of the second device 230 with the latest version 254. Note that, in the described embodiment, the firmware of the old version (the one before) held in the single storage area 234 of the ROM 232 is backed up at the time of updating as the latest version of the firmware at that time point, but the embodiment is not limited thereto. In another embodiment, at the time of the update, the latest version of the firmware to be used in the update may be backed up to the HD 260 for future restoration. In this case, before and after the single storage area 234 of the ROM 232 is rewritten, the latest version 254 is stored in the HD 260 as the backup 262.

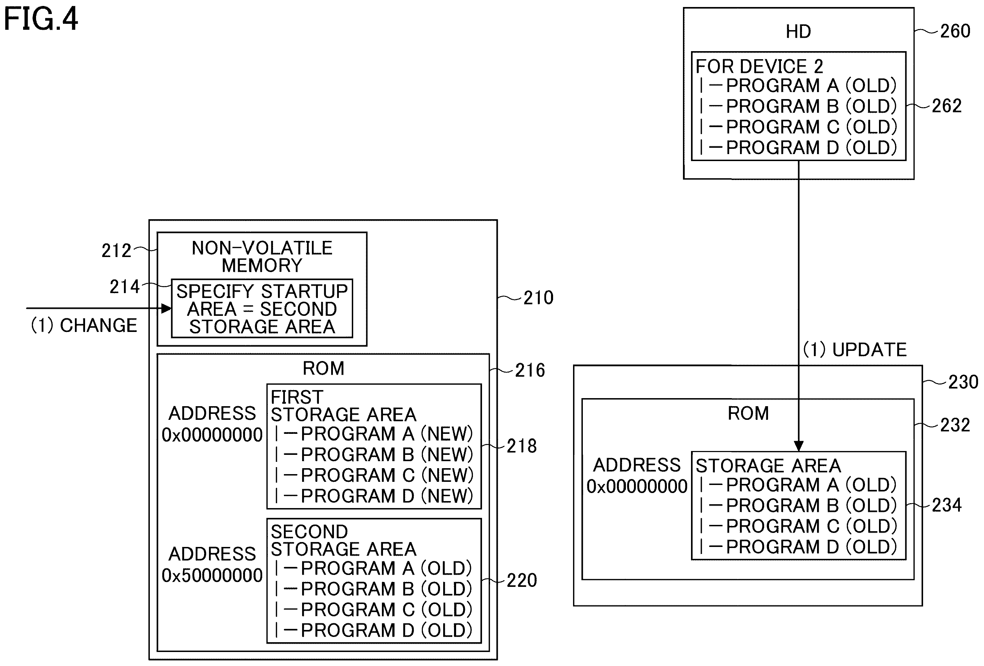

FIG. 4 is a diagram for explaining firmware restoration processing in the multifunction peripheral 100 as an example of the information processing apparatus according to the present embodiment. Similar to FIG. 3, FIG. 4 illustrates a first device 210 as a device having a ROM that supports dual plane storage and a second device 230 as a device having a ROM that does not support dual plane storage.

At the time point before restoration, a plurality of storage areas 218, 220 of the ROM 216 of the first device 210 hold the firmware of the latest version at that time point and the old version (the one before), and information indicating the storage area of the latest version at that time point is held in the specification 214 of the startup area in the non-volatile memory 212. A single storage area 234 of the ROM 232 of the second device 230 holds the firmware of the latest version at that time point, and a backup 262 of the old version (the one before) at that time point of the firmware of the second device 230 is stored in the HD 260.

In the case of restoring the first device 210 supporting dual plane storage to the old version of the firmware, the update/restoration control unit 113 (1) makes a request (sets) the startup control unit of the corresponding device to rewrite the non-volatile memory 212 so as to specify the storage area holding the old version (220 in FIG. 4), as the specification of the storage area to be used at startup (startup area specification = second storage area). At this time, the storage area 218, 220 itself is not changed. Only the storage area to be started up is switched, and, therefore, the restoration processing of the device takes little time, and the startup processing is performed with the old version at the next startup.

On the other hand, in the case of restoring the second device 230, which does not support dual plane storage, to the old version of the firmware,
the update/restoration control unit 113 (1) causes the single storage area 234 of the ROM 232 of the second device 230 to be rewritten with the backup 262 of the old version of the firmware for the second device.

In the described embodiment, the first device 210 is described as having a single ROM (storage device) having a plurality of divided storage areas switchable at startup. However, the present embodiment is not limited thereto. In another embodiment, for example, a plurality of physically different ROMs may be provided to switch the ROM to be used.

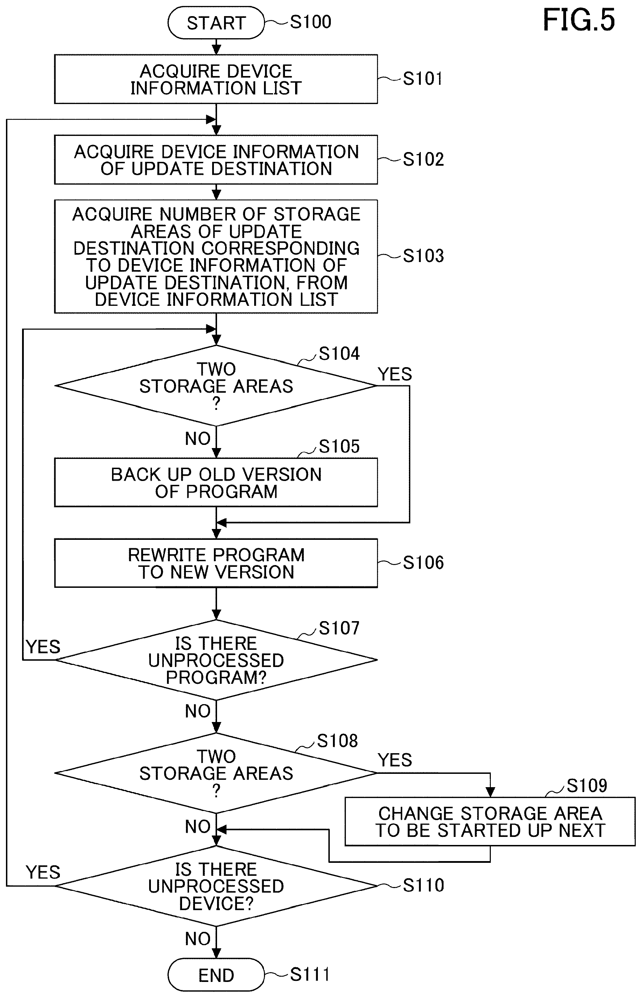

FIG. 5 is a flowchart illustrating firmware update processing executed by the multifunction peripheral 100 as an example of the information processing apparatus according to the present embodiment. The processing illustrated in FIG. 5 is started from step S100, for example, in response to receiving an instruction to update the firmware via the operation panel 140 from a user, in response to receiving a remote instruction to update the firmware from a remote device, or in response to the multifunction peripheral 100 confirming the necessity of updating the firmware according to a predetermined schedule and detecting the existence of the latest firmware. As described above, the firmware data to be updated may be acquired from the recording medium 250, such as an SD card, may be acquired from a server, or may be transmitted remotely from an external device. In the preferred embodiment, the firmware update is performed for all the devices 210 and 230 at once in response to the update instruction in order to prevent mismatching of the combination of the versions among the plurality of devices. The processing illustrated in FIG. 5 will be described on the assumption that the controller 110 (the update/restoration control unit 113) executes the processing.

In step S101, the controller 110 acquires a device information list described later by the update/restoration control unit 113. In step S102, the controller 110 acquires the update destination device information by the update/restoration control unit 113. In step S103, the controller 110 acquires the number of storage areas of the update destination corresponding to the device information of the update destination from a device information list by the update/restoration control unit 113.

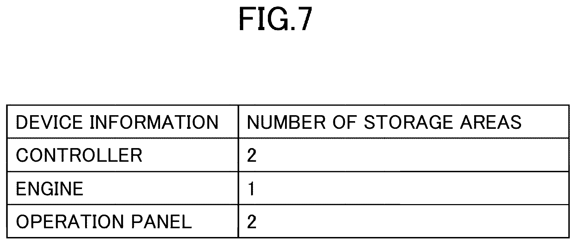

FIG. 7 illustrates the data structure of the device information list for determining the number of storage areas of the update destination device according to the present embodiment. As illustrated in FIG. 7, in the device information list, the number of storage areas (planes) in the ROM of the corresponding device is associated with the device information "controller", "engine", and "operation panel". In step S101, a device information list as illustrated in FIG. 7 is acquired. In step S102, for example, "controller", "engine", or "operation panel" is acquired, from the update target program, as the device information indicating the update target device. In the case where the "controller" is acquired, in step S103, "2" is acquired as the number of storage areas corresponding to "controller". In the case where "engine" is acquired, in step S103, "1" is acquired as the number of storage areas corresponding to "engine". In the case where "operation panel" is acquired, in step S103, "2" is acquired as the number of storage areas corresponding to "operation panel". The device information list illustrated in FIG. 7 is stored as static information on a program in the controller 110, and is referred to from the RAM 102b after the controller 110 is started up. The device information list constitutes the device configuration information of the present embodiment.

In step S104, the controller 110 determines whether the device to be updated has two storage areas by the update/restoration control unit 113. For example, in the example of FIG. 7, when the device information of the update destination is "controller" or "operation panel" as described above, it is determined that there are two storage areas. On the other hand, when the device information of the update destination is "engine", it is determined that there are not two storage areas. In this way, the update/restoration control unit 113 identifies the device corresponding to the first device 210 supporting the dual plane storage based on the device configuration information indicating which of the first device 210 supporting the dual plane storage and the second device 230 not supporting the dual plane storage is the predetermined device among the plurality of devices.

If it is determined in step S104 that there are not two storage areas (NO), the process proceeds to step S105. In this case, the second device 230 not supporting the dual plane storage is updated. In step S105, the controller 110 backs up the old version of the program held in the single storage area 234 of the ROM 232 of the second device 230 to the HD 260 by the update/restoration control unit 113. In step S106, the controller 110 rewrites the program of the single storage area 234 of the ROM 232 of the second device 203 to the latest version by the update/restoration control unit 113.

On the other hand, if it is determined in step S104 that there are two storage areas (YES), the process proceeds directly to step S106. In this case, the first device 210 supporting dual plane storage is updated. In step S106, the controller 110 rewrites the program of one of the plurality of storage areas 218, 220 (the opposite plane of the one currently in use) of the ROM 216 of the first device 210 to the latest version (new version) by the update/restoration control unit 113.

In step S107, the controller 110 determines whether or not an unprocessed program exists by the update/restoration control unit 113. If it is determined in step S107 that an unprocessed program exists (YES), the process returns to step S104, and the processes of steps S104 to S107 are repeated until the update processing of all programs is completed. If it is determined in step S107 that there is no unprocessed program (NO), the process proceeds to step S108.

In step S108, the controller 110 determines whether there are two storage areas by the update/restoration control unit 113. If it is determined in step S108 that there are not two storage areas (NO), the process proceeds to step S110. In this case, no particular process is performed. On the other hand, if it is determined in step S108 that there are two storage areas (YES), the process proceeds to step S109. In this case, in step S109, the controller 110 uses the update/restoration control unit 113 to request the startup control unit of the device to be updated to change the storage area to be started up next time. This allows the storage area to be used for the startup of the first device 210 to be switched to the storage area holding the latest version.

In step S110, the controller 110 further uses the update/restoration control unit 113 to determine whether or not an unprocessed device exists. If it is determined in step S110 that there is still a device to be updated (YES), the process is looped to step S102, and the process is repeated with the next device as the device to be updated. On the other hand, if it is determined in step S110 that there is no unprocessed device (NO), the process proceeds to step S111, and the process ends.

The process illustrated in step S106 is performed by instructing each device to rewrite a program through the controller control unit 114 of the controller 110. Therefore, the controller 110 is the subject of the instruction to rewrite the program of each device.

As described above, before updating to the latest version of the firmware, whether or not the target device supports dual plane storage is identified, and if the target device supports dual plane storage, the old version is not backed up to the HD 260, and only if the target device does not support dual plane storage, the old version of the program is backed up to the HD 260. Therefore, it is possible to reduce the hard disk capacity used for the backup of the old version to the HD 260 by the amount of the device supporting the dual plane storage. Regardless of whether or not the target device supports the dual plane storage, the backup of the old version of the program to the HD 260 may be performed. The backup destination is not limited to the HD and may be an SSD (solid state drive) or the like.

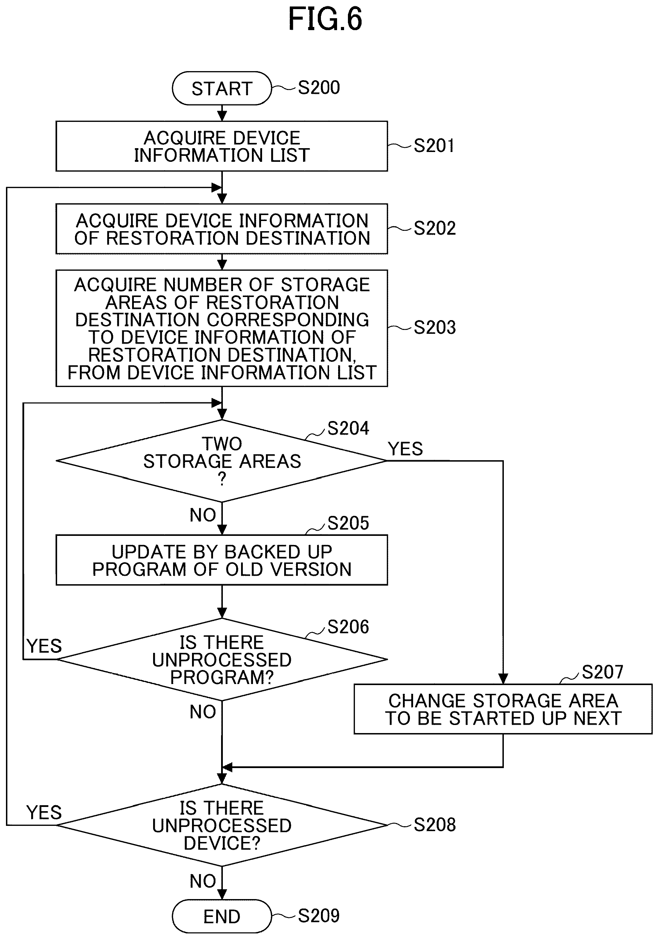

FIG. 6 is a flowchart for explaining the firmware restoration processing executed by the multifunction peripheral 100 as an example of the information processing apparatus according to the present embodiment. The processing illustrated in FIG. 6 is started at step S200 in response to an instruction of firmware restoration from a user via the operation panel 140 or in response to a remote instruction of firmware restoration from a remote device. In the preferred embodiment, the firmware restoration is performed in response to an instruction of restoration to all devices at once in order to prevent mismatching of combinations of versions among devices.

In step S201, the controller 110 acquires a device information list as illustrated in FIG. 7 by the update/restoration control unit 113. In step S202, the controller 110 uses the update/restoration control unit 113 to acquire device information of the restoration destination. In step S203, the controller 110 uses the update/restoration control unit 113 to acquire the number of storage areas of the restoration destination corresponding to the device information of the restoration destination from the device information list.

In step S204, the controller 110 uses the update/restoration control unit 113 to determine whether the device to be restored has two storage areas. If it is determined in step S204 that the device to be restored does not have two storage areas (NO), the process proceeds to step S205. In this case, the second device 230 is restored. In step S205, the controller 110 uses the update/restoration control unit 113 to read the backed-up old version program from the HD260, internally updates the ROM 232 of the second device 230 with the old version program, and rewrites the single storage area 234 of the ROM 232 of the second device 203 with the old version program.

In step S206, the controller 110 uses the update/restoration control unit 113 to determine whether an unprocessed program exists. If it is determined in step S206 that an unprocessed program exists (YES), the process returns to step S204, and steps S204 to S206 are repeated until the update processing of all programs is completed. If it is determined in step S206 that there is no unprocessed program (NO), the process proceeds to step S208.

On the other hand, if it is determined in step S204 that there are two storage areas (YES), the process proceeds to step S207. In this case, the first device 210 is restored. In step S207, the controller 110 uses the update/restoration control unit 113 to request the startup control unit of the device to be restored to change the storage area to be started up next time. As a result, the storage area to be used when the first device 210 is started up is switched to the storage area holding the old version.

In step S208, the controller 110 uses the update/restoration control unit 113 to determine whether or not an unprocessed device exists. If it is determined in step S208 that there is still a device to be restored (YES), the processing is looped to step S202, and the processing is repeated with the next device as the device to be restored. On the other hand, if it is determined in step S208 that there is no unprocessed device (NO), the processing proceeds to step S209, and the processing is ended.

If the device to be restored is identified to support dual plane storage before the restoration to the old version is performed, the rewriting to the old version is not performed and only the information of the storage area to be started up next time is rewritten. On the other hand, only if the device does not support dual plane storage, the program is rewritten to the program of the old version backed up to the HD. Thus, if the device to be restored supports dual plane storage, the rewriting to the old version is not required, and the restoration time to the old version can be greatly reduced.

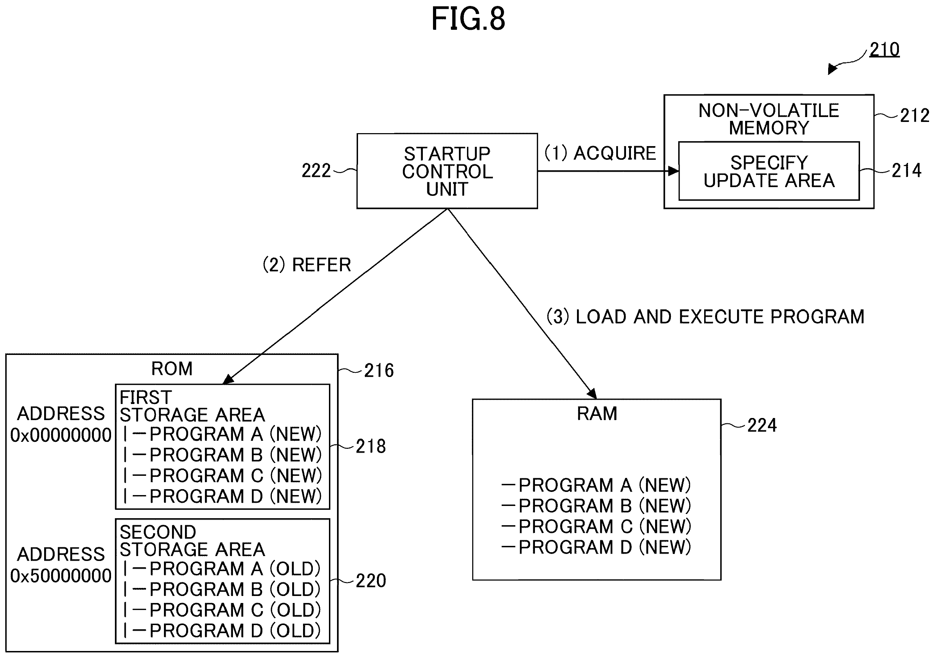

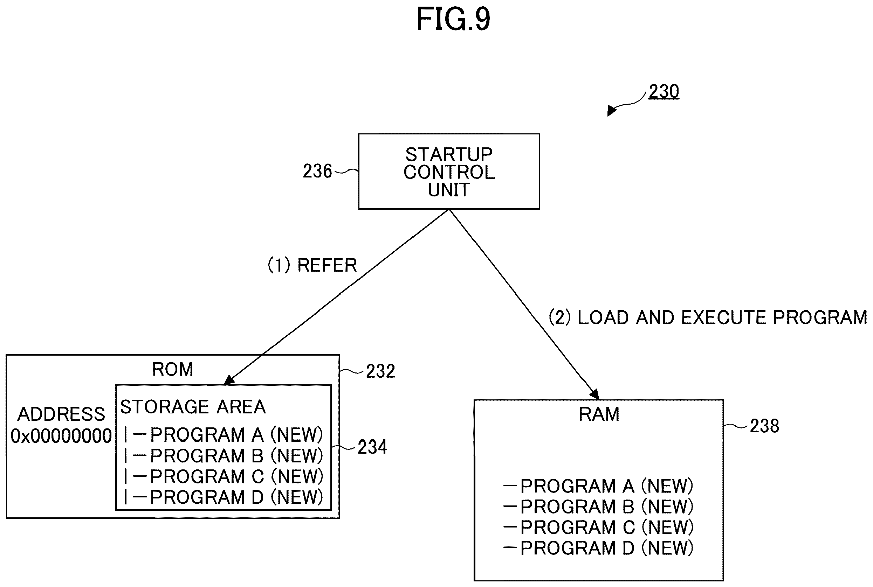

FIGS. 8 and 9 are diagrams for explaining the startup processing after the update or the restoration, which is executed by the multifunction peripheral 100 as an example of the information processing apparatus according to the present embodiment. FIG. 8 illustrates the startup processing of the first device 210 that supports dual plane storage, and FIG. 9 illustrates the startup processing of the second device 230 that does not support dual plane storage.

As illustrated in FIG. 8, for the first device 210 that supports dual plane storage, when starting up the first device 210, the startup processing unit 222 first acquires the value of the specification 214 of the startup area of the non-volatile memory 212, reads the program from the storage area corresponding to the value (information indicating the storage area to be used at the time of startup) of the specification 214 of the startup area among the plurality of storage areas 218, 220, loads the program in the RAM 224 that is the work area, and executes the program. Thus, the startup processing is performed based on the appropriate version of the program held in the specified startup area.

On the other hand, as illustrated in FIG. 9, with respect to the second device 230 which does not support dual plane storage, when starting up the second device 230, the startup processing unit 236 reads the program from the single storage area 234, loads the program to the RAM 238 which is the work area, and executes the program as usual.

In this way, both the first device 210 which supports dual plane storage and the second device 230 which does not support dual plane storage are started up with the updated or restored version. Therefore, degradation of the quality caused by the mismatch of the versions between the devices 210 and 230 is also prevented.

According to the above-described embodiments, it is possible to provide an information processing apparatus, a method, a program, and a control device in which, in a configuration in which a device having a plurality of storage areas for holding different versions of a program and a device that does not coexist, the time required for restoration can be reduced while preventing the mismatching of versions between devices and thereby preventing the degradation of the quality of the entire apparatus.

The functions of each of the embodiments described above may be implemented by one or more processing circuits. As used herein, a "processing circuit" includes a processor programmed to execute each function by software such as a processor implemented in an electronic circuit; or devices such as an Application Specific Integrated Circuit (ASIC), a digital signal processor (DSP), a field programmable gate array (FPGA), and a conventional circuit module, designed to execute each function as described above.

## Claims

1. An image processing apparatus (100) comprising:
a first device (210);
a second device (230);
a control unit (113) configured to implement control to update or restore at least one of a first firmware program of the first device (210) or a second firmware program of the second device; and
a storage unit (109) configured to store a first version of the second firmware program of the second device (230), wherein
the first device (210) includes a plurality of storage areas (218, 220) for respectively holding a first version and a second version of the first firmware program,
the second device includes a storage area (234) for holding a second version of the second firmware program different from the first version of the second firmware program,
when restoring the first firmware program of the first device (210), the control unit (113) makes a setting in the first device (210) so as to switch a storage area (218, 220) used for startup among the plurality of the storage areas (218, 220), and
when restoring the second firmware program of the second device (230), the control unit (113) rewrites the storage area (234) of the second device (230) with the first version of the second firmware program stored in the storage unit (109),
the control unit (113) is configured to rewrite, when updating the first firmware program of the first device (210), one storage area (218, 220) of the plurality of the storage areas (218, 220) with a latest version of the first firmware program and makes a setting so as to switch the storage area (218, 220) used for the startup to the one storage area (218, 220) holding the latest version of the first firmware program, and
in that the control unit (113) is configured to cause, when updating the second firmware program of the second device (230), a current version of the second firmware program held in the storage area (234) of the second device (230) to be held in the storage unit (109), and to rewrite the storage area (234) of the second device (230) with a latest version of the second firmware program.

2. The image processing apparatus (100) according to claim 1, wherein
the information processing apparatus (100) includes a plurality of devices including one or more of the first devices (210) and one or more of the second devices (230), and
the control unit (113) is configured to identify that the one device corresponds to the first device (210), based on device configuration information indicating that one device of the plurality of devices is either the first device (210) or the second device (230).

3. The image processing apparatus (100) according to claim 2, wherein the device configuration information indicates a number of storage areas (218, 220) included in each of the plurality of devices.

4. The image processing apparatus (100) according to claim 1, wherein
the first device (210) includes a startup control unit (112) configured to acquire information indicating the storage area (218, 220) to be used for the startup from a non-volatile memory (212), read the first firmware program from the storage area (218, 220) indicated by the information, and load the first firmware program in a work area (143), and
the second device (230) includes a startup control unit configured to read the second firmware program from the storage area of the second device (230) and load the second firmware program in a work area (238).

5. The image processing apparatus (100) according to claim 1, wherein restoring of the first firmware program of the first device (210) and restoring of the second firmware program of the second device (230) are executed in response to an instruction to restore the information processing apparatus (100).

6. The image processing apparatus (100) according to claim 1, wherein the control unit (113) and the storage unit (109) are provided in the first device (210), the second device (230), or in other devices different from the first device (210) and the second device (230).

7. The image processing apparatus (100) according to claim 1, wherein the plurality of the storage areas (218, 220) of the first device (210) are obtained by dividing a storage area in a storage device included in the first device (210).

8. A method executed by an image processing apparatus (100) including a first device (210) and a second device (230), the first device (210) including a plurality of storage areas (218, 220) for respectively holding a first version and a second version of a first firmware program of the first device (210), the second device (230) including a storage area (234) for holding a second version of a second firmware program of the second device (230) different from a first version of the second firmware program, the first version of the second firmware program of the second device (230) being stored in a storage unit, the method comprising:
making a setting in the first device (210) so as to switch a storage area (218,220) used for startup among the plurality of the storage areas (218, 220) when restoring the first firmware program of the first device (210); and
rewriting the storage area (234) of the second device (230) with the first version of the second firmware program stored in the storage unit (109), when restoring the second firmware program of the second device (230),
rewriting one storage area of the plurality of the storage areas (218, 220) with a latest version of the first firmware program and making a setting so as to switch the storage area (218, 220) used for the startup to the one storage area (218, 220) holding the latest version of the first firmware program, when updating the first firmware program of the first device (210); and
causing a current version of the second firmware program held in the storage area of the second device (210) to be held in the storage unit (109), and rewriting the storage area of the second device (230) with a latest version of the second firmware program, when updating the second firmware program of the second device (230).

9. A program for implementing an image processing apparatus (100) including a first device (210), a second device (230), and a storage unit (109), the first device (210) including a plurality of storage areas (218, 220) for respectively holding a first version and a second version of a first firmware program of the first device (210), the second device (210) including a storage area (234) for holding a second version of a second firmware program of the second device (230) different from a first version of the second firmware program, the storage unit (109) storing the first version of the second firmware program of the second device (210), the program causing a computer to function as a control unit (113) configured to implement control to update or restore at least one of the first firmware program of the first device (210) or the second firmware program of the second device (230), wherein the control unit (113) executes:
making a setting in the first device (210) so as to switch a storage area (218, 220) used for startup among the plurality of the storage areas (218, 220) when restoring the first firmware program of the first device (210); and
rewriting the storage area (234) of the second device (230) with the first version of the second firmware program stored in the storage unit (109), when restoring the second firmware program of the second device (230),
rewriting one storage area (218, 220) of the plurality of the storage areas (218, 220) with a latest version of the first firmware program and making a setting so as to switch the storage area (218, 220) used for the startup to the one storage area (218, 220) holding the latest version of the first firmware program, when updating the first firmware program of the first device (210); and
causing a current version of the second firmware program held in the storage area (234) of the second device (230) to be held in the storage unit, and rewriting the storage area (234) of the second device (230) with a latest version of the second firmware program, when updating the second firmware program of the second device (230).

## Patentansprüche

1. Bildverarbeitungsvorrichtung (100), umfassend:
eine erste Vorrichtung (210);
eine zweite Vorrichtung (230);
eine Steuereinheit (113), die so konfiguriert ist, dass sie eine Steuerung zur Aktualisierung oder Wiederherstellung mindestens eines ersten Firmware-Programms der ersten Vorrichtung (210) oder eines zweiten Firmware-Programms der zweiten Vorrichtung durchführt; und
eine Speichereinheit (109), die so konfiguriert ist, dass sie eine erste Version des zweiten Firmware-Programms der zweiten Vorrichtung (230) speichert, wobei
die erste Vorrichtung (210) eine Vielzahl von Speicherbereichen (218, 220) zum jeweiligen Halten einer ersten Version und einer zweiten Version des ersten Firmware-Programms umfasst,
die zweite Vorrichtung einen Speicherbereich (234) zum Halten einer zweiten Version des zweiten Firmware-Programms umfasst, die sich von der ersten Version des zweiten Firmware-Programms unterscheidet,
die Steuereinheit (113) beim Wiederherstellen des ersten Firmware-Programms der ersten Vorrichtung (210) eine Einstellung in der ersten Vorrichtung (210) vornimmt, um einen für den Start verwendeten Speicherbereich (218, 220) unter den mehreren Speicherbereichen (218, 220) umzuschalten, und
beim Wiederherstellen des zweiten Firmware-Programms der zweiten Vorrichtung (230) schreibt die Steuereinheit (113) den Speicherbereich (234) der zweiten Vorrichtung (230) mit der in der Speichereinheit (109) gespeicherten ersten Version des zweiten Firmware-Programms neu,
die Steuereinheit (113) ist so konfiguriert, dass sie bei der Aktualisierung des ersten Firmware-Programms der ersten Vorrichtung (210) einen Speicherbereich (218, 220) aus der Vielzahl der Speicherbereiche (218, 220) mit einer neuesten Version des ersten Firmware-Programms zu überschreiben und eine Einstellung vorzunehmen, um den für den Start verwendeten Speicherbereich (218, 220) auf den einen Speicherbereich (218, 220) umzuschalten, der die neueste Version des ersten Firmware-Programms enthält, und
darin, dass die Steuereinheit (113) so konfiguriert ist, dass sie bei der Aktualisierung des zweiten Firmware-Programms der zweiten Vorrichtung (230) dass eine aktuelle Version des zweiten Firmware-Programms, die im Speicherbereich (234) der zweiten Vorrichtung (230) vorliegt, in der Speichereinheit (109) gespeichert wird, und den Speicherbereich (234) der zweiten Vorrichtung (230) mit einer neuesten Version des zweiten Firmware-Programms zu überschreiben.

2. Bildverarbeitungsvorrichtung (100) nach Anspruch 1, wobei
die Bildverarbeitungsvorrichtung (100) eine Vielzahl von Vorrichtungen umfasst, die eines oder mehrere der ersten Vorrichtung (210) und eines oder mehrere der zweiten Vorrichtung (230) enthalten, und
die Steuereinheit (113) so konfiguriert ist, dass sie auf der Grundlage von Vorrichtungskonfigurationsinformationen, die angeben, dass eine Vorrichtung der Vielzahl von Vorrichtungen entweder die erste Vorrichtung (210) oder die zweite Vorrichtung (230) ist, identifiziert, dass die eine Vorrichtung der ersten Vorrichtung (210) entspricht.

3. Bildverarbeitungsvorrichtung (100) nach Anspruch 2, wobei die Vorrichtungskonfigurationsinformationen eine Anzahl von Speicherbereichen (218, 220) angeben, die in jedem der mehreren Vorrichtungen enthalten sind.

4. Bildverarbeitungsvorrichtung (100) nach Anspruch 1, wobei
die erste Vorrichtung (210) eine Startsteuereinheit (112) umfasst, die so konfiguriert ist, dass sie Informationen, die den für den Start zu verwendenden Speicherbereich (218, 220) angeben, aus einem nichtflüchtigen Speicher (212) abruft, das erste Firmware-Programm aus dem durch die Informationen angegebenen Speicherbereich (218, 220) zu lesen und das erste Firmware-Programm in einen Arbeitsbereich (143) zu laden, und
die zweite Vorrichtung (230) eine Startsteuereinheit umfasst, die so konfiguriert ist, dass sie das zweite Firmware-Programm aus dem Speicherbereich der zweiten Vorrichtung (230) liest und das zweite Firmware-Programm in einen Arbeitsbereich (238) lädt.

5. Bildverarbeitungsvorrichtung (100) nach Anspruch 1, wobei das Wiederherstellen des ersten Firmware-Programms der ersten Vorrichtung (210) und das Wiederherstellen des zweiten Firmware-Programms der zweiten Vorrichtung (230) als Reaktion auf einen Befehl zum Wiederherstellen der Informationsverarbeitungsvorrichtung (100) ausgeführt werden.

6. Bildverarbeitungsvorrichtung (100) nach Anspruch 1, wobei die Steuereinheit (113) und die Speichereinheit (109) in der ersten Vorrichtung (210), der zweiten Vorrichtung (230) oder in anderen Vorrichtungen, die sich von der ersten Vorrichtung (210) und der zweiten Vorrichtung (230) unterscheiden, vorgesehen sind.

7. Bildverarbeitungsvorrichtung (100) nach Anspruch 1, wobei die mehreren Speicherbereiche (218, 220) der ersten Vorrichtung (210) durch Aufteilen eines Speicherbereichs in einer in der ersten Vorrichtung (210) enthaltenen Speichervorrichtung erhalten werden.

8. Verfahren, das von einer Bildverarbeitungsvorrichtung (100) ausgeführt wird, die eine erste Vorrichtung (210) und eine zweite Vorrichtung (230) umfasst, wobei die erste Vorrichtung (210) eine Vielzahl von Speicherbereichen (218, 220) zum jeweiligen Speichern einer ersten Version und einer zweiten Version eines ersten Firmware-Programms der ersten Vorrichtung (210) umfasst, wobei die zweite Vorrichtung (230) einen Speicherbereich (234) zum Speichern einer zweiten Version eines zweiten Firmware-Programms der zweiten Vorrichtung (230) umfasst, die sich von einer ersten Version des zweiten Firmware-Programms unterscheidet, wobei die erste Version des zweiten Firmware-Programms der zweiten Vorrichtung (230) in einer Speichereinheit gespeichert ist, wobei das Verfahren umfasst:
Vornahme einer Einstellung in der ersten Vorrichtung (210), um bei der Wiederherstellung des ersten Firmware-Programms der ersten Vorrichtung (210) einen für den Start verwendeten Speicherbereich (218, 220) unter den mehreren Speicherbereichen (218, 220) umzuschalten; und
Neuschreiben des Speicherbereichs (234) der zweiten Vorrichtung (230) mit der in der Speichereinheit (109) gespeicherten ersten Version des zweiten Firmware-Programms, wenn das zweite Firmware-Programm der zweiten Vorrichtung (230) wiederhergestellt wird,
Neuschreiben eines Speicherbereichs aus der Vielzahl der Speicherbereiche (218, 220) mit einer aktuellen Version des ersten Firmware-Programms und Vornehmen einer Einstellung, um den für den Start verwendeten Speicherbereich (218, 220) auf den einen Speicherbereich (218, 220) umzuschalten, der die aktuelle Version des ersten Firmware-Programms enthält, wenn das erste Firmware-Programm der ersten Vorrichtung aktualisiert wird (210); und
Veranlassen, dass eine aktuelle Version des zweiten Firmware-Programms, die im Speicherbereich der zweiten Vorrichtung (210) gespeichert ist, in der Speichereinheit (109) gespeichert wird, und Überschreiben des Speicherbereichs der zweiten Vorrichtung (230) mit einer neuesten Version des zweiten Firmware-Programms, wenn das zweite Firmware-Programm der zweiten Vorrichtung (230) aktualisiert wird.

9. Programm zur Implementierung einer Bildverarbeitungsvorrichtung (100), die eine erste Vorrichtung (210), eine zweite Vorrichtung (230) und eine Speichereinheit (109) umfasst, wobei die erste Vorrichtung (210) mehrere Speicherbereiche (218, 220) zum jeweiligen Speichern einer ersten Version und einer zweiten Version eines ersten Firmware-Programms der ersten Vorrichtung (210) umfasst, wobei die zweite Vorrichtung (210) einen Speicherbereich (234) zum Speichern einer zweiten Version eines zweiten Firmware-Programms der zweiten Vorrichtung (230) umfasst, die sich von einer ersten Version des zweiten Firmware-Programms unterscheidet, wobei die Speichereinheit (109) die erste Version des zweiten Firmware-Programms der zweiten Vorrichtung (210) speichert, wobei das Programm bewirkt, dass ein Computer als Steuereinheit (113) fungiert, die so konfiguriert ist, dass sie eine Steuerung zur Aktualisierung oder Wiederherstellung mindestens eines der ersten Firmware-Programme der ersten Vorrichtung (210) oder des zweiten Firmware-Programms der zweiten Vorrichtung (230) durchführt, wobei die Steuereinheit (113) Folgendes ausführt:
eine Einstellung in der ersten Vorrichtung (210) vornehmen, um bei der Wiederherstellung des ersten Firmware-Programms der ersten Vorrichtung (210) einen für den Start verwendeten Speicherbereich (218, 220) unter den mehreren Speicherbereichen (218, 220) umzuschalten; und
das Umschreiben des Speicherbereichs (234) der zweiten Vorrichtung (230) mit der ersten Version des zweiten Firmware-Programms, die in der Speichereinheit (109) gespeichert ist, beim Wiederherstellen des zweiten Firmware-Programms der zweiten Vorrichtung (230),
Neuschreiben eines Speicherbereichs (218, 220) aus der Vielzahl der Speicherbereiche (218, 220) mit einer aktuellen Version des ersten Firmware-Programms und Vornehmen einer Einstellung, um den für den Start verwendeten Speicherbereich (218, 220) auf den einen Speicherbereich (218, 220), der die neueste Version des ersten Firmware-Programms enthält, umzuschalten; und
Veranlassen, dass eine aktuelle Version des zweiten Firmware-Programms, die im Speicherbereich (234) der zweiten Vorrichtung (230) gespeichert ist, in der Speichereinheit gespeichert wird, und Überschreiben des Speicherbereichs (234) der zweiten Vorrichtung (230) mit einer neuesten Version des zweiten Firmware-Programms, wenn das zweite Firmware-Programm der zweiten Vorrichtung (230) aktualisiert wird.

## Revendications

1. Appareil de traitement d'images (100) comprenant :
un premier dispositif (210),
un deuxième dispositif (230),
une unité de commande (113) conçue pour mettre en œuvre une commande visant à actualiser ou restaurer un premier programme de micrologiciel du premier dispositif (210) et/ou un deuxième programme de micrologiciel du deuxième dispositif, et
une unité de stockage (109) conçue pour stocker une première version du deuxième programme de micrologiciel du deuxième dispositif (230) ;
ledit premier dispositif (210) comprenant une pluralité de régions de stockage (218, 220) destinées à contenir respectivement une première version et une deuxième version du premier programme micrologiciel,
ledit deuxième dispositif comprenant une région de stockage (234) destinée à contenir une deuxième version du deuxième programme micrologiciel différente de la première version du deuxième programme micrologiciel,
lors de la restauration du premier programme micrologiciel du premier dispositif (210), ladite unité de commande (113) réalisant un paramétrage dans le premier dispositif (210) de façon à effectuer un basculement concernant la région de stockage (218, 220) utilisée pour le démarrage parmi la pluralité de régions de stockage (218, 220), et
lors de la restauration du deuxième programme micrologiciel du deuxième dispositif (230), ladite unité de commande (113) réécrivant la région de stockage (234) du deuxième dispositif (230) avec la première version du deuxième programme de micrologiciel stockée dans l'unité de stockage (109),
ladite unité de commande (113) étant conçue pour réécrire, lors de l'actualisation du premier programme de micrologiciel du premier dispositif (210), une région de stockage (218, 220) de la pluralité de régions de stockage (218, 220) avec la dernière version du premier programme de micrologiciel et réalisant un paramétrage de façon à effectuer un basculement concernant la région de stockage (218, 220) utilisée pour le démarrage vers la région de stockage (218, 220) contenant la dernière version du premier programme de micrologiciel, et
l'unité de commande (113) étant conçue pour transférer, lors de l'actualisation du deuxième programme de micrologiciel du deuxième dispositif (230), une version actuelle du deuxième programme de micrologiciel contenue dans la région de stockage (234) du deuxième dispositif (230) vers l'unité de stockage (109), et pour réécrire la région de stockage (234) du deuxième dispositif (230) avec la dernière version du deuxième programme de micrologiciel.

2. Appareil de traitement d'images (100) selon la revendication 1, dans lequel :
l'appareil de traitement d'informations (100) comprend une pluralité de dispositifs comprenant un ou plusieurs premiers dispositifs (210) et un ou plusieurs deuxièmes dispositifs (230), et
l'unité de commande (113) est conçue pour identifier si un dispositif correspond au premier dispositif (210) en fonction d'informations de configuration de dispositif indiquant qu'un dispositif parmi la pluralité de dispositifs est soit le premier dispositif (210), soit le deuxième dispositif (230).

3. Appareil de traitement d'images (100) selon la revendication 2, dans lequel les informations de configuration de dispositif indiquent le nombre de régions de stockage (218, 220) comprises dans chaque dispositif de la pluralité de dispositifs.

4. Appareil de traitement d'images (100) selon la revendication 1, dans lequel :
le premier dispositif (210) comprend une unité de commande de démarrage (112) conçue pour acquérir, à partir d'une mémoire non volatile (212), des informations indiquant la région de stockage (218, 220) à utiliser pour le démarrage, lire le premier programme de micrologiciel dans la région de stockage (218, 220) indiquée par les informations, et charger le premier programme de micrologiciel dans une région de travail (143), et
le deuxième dispositif (230) comprend une unité de commande de démarrage conçue pour lire le deuxième programme de micrologiciel dans la région de stockage du deuxième dispositif (230) et charger le deuxième programme de micrologiciel dans une région de travail (238).

5. Appareil de traitement d'images (100) selon la revendication 1, dans lequel la restauration du premier programme de micrologiciel du premier dispositif (210) et la restauration du deuxième programme de micrologiciel du deuxième dispositif (230) sont exécutées en réponse à une instruction de restauration de l'appareil de traitement d'informations (100).

6. Appareil de traitement d'images (100) selon la revendication 1, dans lequel l'unité de commande (113) et l'unité de stockage (109) sont prévues dans le premier dispositif (210), le deuxième dispositif (230) ou dans d'autres dispositifs différents du premier dispositif (210) et du deuxième dispositif (230).

7. Appareil de traitement d'images (100) selon la revendication 1, dans lequel la pluralité de régions de stockage (218, 220) du premier dispositif (210) sont obtenues par division d'une région de stockage appartenant à un dispositif de stockage présent dans le premier dispositif (210).

8. Procédé exécuté par un appareil de traitement d'images (100) comprenant un premier dispositif (210) et un deuxième dispositif (230), le premier dispositif (210) comprenant une pluralité de régions de stockage (218, 220) destinées à contenir respectivement une première version et une deuxième version d'un premier programme de micrologiciel du premier dispositif (210), le deuxième dispositif (230) comprenant une région de stockage (234) destinée à contenir une deuxième version d'un deuxième programme de micrologiciel du deuxième dispositif (230), différente d'une première version du deuxième programme de micrologiciel, la première version du deuxième programme de micrologiciel du deuxième dispositif (230) étant stockée dans une unité de stockage, le procédé comprenant :
la réalisation d'un paramétrage dans le premier dispositif (210) de façon à effectuer un basculement concernant une région de stockage (218, 220) utilisée pour le démarrage parmi la pluralité de régions de stockage (218, 220) lors de la restauration du premier programme micrologiciel du premier dispositif (210), et
la réécriture de la région de stockage (234) du deuxième dispositif (230) avec la première version du deuxième programme de micrologiciel stockée dans l'unité de stockage (109), lors de la restauration du deuxième programme de micrologiciel du deuxième dispositif (230),
la réécriture d'une région de stockage de la pluralité de régions de stockage (218, 220) avec la dernière version du premier programme de micrologiciel et la réalisation d'un paramétrage de façon à effectuer un basculement concernant la région de stockage (218, 220) utilisée pour le démarrage vers la région de stockage (218, 220) contenant la dernière version du premier programme de micrologiciel, lors de l'actualisation du premier programme micrologiciel du premier dispositif (210), et
le transfert d'une version actuelle du deuxième programme de micrologiciel contenue dans la région de stockage du deuxième dispositif (210) vers l'unité de stockage (109), et la réécriture de la région de stockage du deuxième dispositif (230) avec la dernière version du deuxième programme de micrologiciel, lors de l'actualisation du deuxième programme de micrologiciel du deuxième dispositif (230).

9. Programme de mise en œuvre d'un appareil de traitement d'images (100) comprenant un premier dispositif (210), un deuxième dispositif (230) et une unité de stockage (109), le premier dispositif (210) comprenant une pluralité de régions de stockage (218, 220) destinées à contenir respectivement une première version et une deuxième version d'un premier programme de micrologiciel du premier dispositif (210), le deuxième dispositif (230) comprenant une région de stockage (234) destinée à contenir une deuxième version d'un deuxième programme de micrologiciel du deuxième dispositif (230), différente d'une première version du deuxième programme de micrologiciel, l'unité de stockage (109) contenant la première version du deuxième programme de micrologiciel du deuxième dispositif (230), le programme amenant un ordinateur à fonctionner en tant qu'unité de commande (113) conçue pour mettre en œuvre une commande visant à actualiser ou restaurer le premier programme de micrologiciel du premier dispositif (210) et/ou le deuxième programme de micrologiciel du deuxième dispositif (230), l'unité de commande (113) exécutant :
la réalisation d'un paramétrage dans le premier dispositif (210) de façon à effectuer un basculement concernant une région de stockage (218, 220) utilisée pour le démarrage parmi la pluralité de régions de stockage (218, 220) lors de la restauration du premier programme micrologiciel du premier dispositif (210), et
la réécriture de la région de stockage (234) du deuxième dispositif (230) avec la première version du deuxième programme de micrologiciel stockée dans l'unité de stockage (109), lors de la restauration du deuxième programme de micrologiciel du deuxième dispositif (230),
la réécriture d'une région de stockage (218, 220) de la pluralité de régions de stockage (218, 220) avec la dernière version du premier programme de micrologiciel et la réalisation d'un paramétrage de façon à effectuer un basculement concernant la région de stockage (218, 220) utilisée pour le démarrage vers la région de stockage (218, 220) contenant la dernière version du premier programme de micrologiciel, lors de l'actualisation du premier programme micrologiciel du premier dispositif (210), et
le transfert d'une version actuelle du deuxième programme de micrologiciel contenue dans la région de stockage (234) du deuxième dispositif (230) vers l'unité de stockage, et la réécriture de la région de stockage (234) du deuxième dispositif (230) avec la dernière version du deuxième programme de micrologiciel, lors de l'actualisation du deuxième programme de micrologiciel du deuxième dispositif (230).
